# EUROPÄISCHE PATENTSCHRIFT

(11) **EP 2 029 432 B1**
(45) Veröffentlichungstag und Bekanntmachung des Hinweises auf die Patenterteilung: **02.03.2011**
(21) Anmeldenummer: 07764696.6
(22) Anmeldetag: 18.06.2007
(51) Int. Cl.: B65B 1/12, B65B 25/00, B65G 33/18

(54) **FÜLLAGGREGAT**
FILLING UNIT
ORGANE DE REMPLISSAGE

(30) Priorität: 21.06.2006 DE 102006028473
(43) Veröffentlichungstag der Anmeldung: 04.03.2009
(73) Patentinhaber: Winter Von Adlersflügel, Johannes Bernhard, 04105 Leipzig (DE)
(72) Erfinder: Winter Von Adlersflügel, Johannes Bernhard, 04105 Leipzig (DE)
(74) Vertreter: Bockhorni & Kollegen
(86) Internationale Anmeldenummer: PCT/EP2007/005332
(87) Internationale Veröffentlichungsnummer: WO 2007/147540

(56) Entgegenhaltungen:
- EP-A1- 0 642 849
- DE-C- 349 523
- FR-A- 1 582 218
- FR-A1- 2 380 204
- GB-A- 413 214
- GB-A- 1 588 226
- JP-A- 57 141 309
- US-A- 4 484 606

## Beschreibung

Die Erfindung betrifft ein Füllaggregat zum Befüllen von Behältnissen mit schüttfähigen Füllgütern, insbesondere zum Befüllen von sack- oder schlauchförmigen Hüllen mit Sand, Kies, Schotter, Erdstoffen oder ähnlichem, welche zur Errichtung von Wällen z. B. für Schutzbauwerke (Schutzleitsysteme auf Autobahnen, Deiche, Lärmwälle usw.) verwendet werden.

Aus dem deutschen Patent 349523 ist eine Förderschraube oder Pumpe bekannt, bei der mehrere gleichgängige, miteinander in Eingriff stehende Schrauben in einem dicht umschließenden Gehäuse angeordnet sind und schüttfähige Füllgüter transportieren, wobei eine sich gegenseitig selbstreinigende Berührung der Schraubenelemente erfolgt.

Diese Vorrichtung hat den Nachteil, dass Grobbestandteile der Füllgüter, z.B. im Sand enthaltene Steine, die nicht zwischen die Windungen der Schraubenelemente passen, zu Blockierungen führen können.

Aus der EP 0642849 B1 ist außerdem eine Umhüllung von Sedimenten und Schlick mit schlauchförmigen Hüllen für Wasserbauwerke bekannt. Das stark wasserhaltige Füllgut wird in eine Kolbenpresse gefüllt und zu einem zylinderförmigen Strang gepresst, der in eine schlauchförmige Umhüllung eingeschoben oder umwickelt wird. Die verwendete Kolbenpresse ist zur Entwässerung des stark wasserhaltigen Füllgutes erforderlich, zum Befüllen von Hüllen mit im Wesentlichen trockenen Füllgütern jedoch ungeeignet. Die gesamte Anlage erfordert außerdem einen stationären Betrieb. Damit ist ein Einsatz jeweils vor Ort nicht möglich.

Aus der JP 57 141 309 ist ein Füllaggregat gemäß dem Oberbegriff des Anspruchs 1 bekannt.

Der Erfindung liegt die Aufgabe zugrunde, ein Füllaggregat zum Befüllen von sack- oder schlauchförmigen Hüllen mit Füllgütern zu schaffen, bei welchem im Füllgut vorhandene Grobbestandteile nicht zu einer Blockierung des Aggregates führen und mit welchem die Befüllung an jedem beliebigen Einsatzort stattfinden kann.

Die Aufgabe wird erfindungsgemäß durch die Merkmale des Patentanspruches 1 gelöst. Vorteilhafte Ausführungsformen der Erfindung bilden die Merkmale der Unteransprüche 2 bis 14.

Die Erfindung soll im Folgenden anhand von zwei bevorzugten Ausführungsbeispielen und unter Bezugnahme auf die Figuren 1 bis 6 näher erläutert werden.
- Figur 1: zeigt einen Querschnitt durch ein erfindungsgemäßes Füllaggregat nach einer ersten bevorzugten Ausführungsform;
- Figur 2: zeigt das erfindungsgemäße Füllaggregat der ersten bevorzugten Aus- führungsform in einer perspektivischen, mit Aufbrüchen versehenen Darstellung.
- Figur 3: zeigt eine perspektivische Darstellung des erfindungsgemäßen Füllag- gregates in der ersten bevorzugten Ausführungsform, bei welchem die Zuführung von Bahnmaterial zu einer Verbindungseinrichtung zwecks Verbindung der Längskanten des Bahnmaterials zu einer schlauchför- migen Hülle und deren Befüllung an der Ausgangsöffnung des Füllag- gregates dargestellt ist.
- Figur 4: zeigt eine perspektivische Darstellung des erfindungsgemäßen Füllag- gregates in einer weiteren bevorzugten Ausführungsform, in welcher zusätzliche interne und externe Rüttel- und Vibrationseinrichtungen vorgesehen sind.
- Figur 5: zeigt eine mechanisch angetriebene, sich axial bewegende, mit einer Schnecke verbundene interne Rüttel- und Vibrationseinrichtung.
- Figur 6: zeigt eine Schnecke, die im hinteren Teil mit einer sich axial bewe- genden internen Rüttel- und Vibrationseinrichtung und im vorderen Teil mit einer sich in beliebigen Richtungen bewegenden internen Rüttel- und Vibrationseinrichtung verbunden ist.

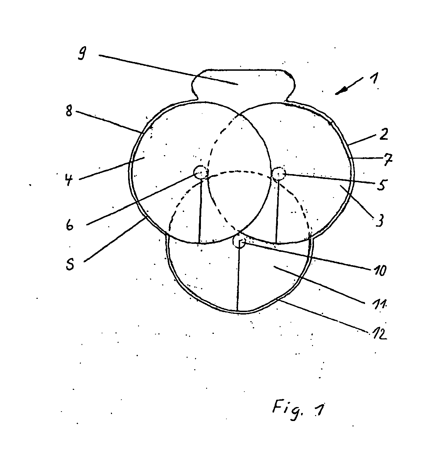

In Figur 1 ist ein Querschnitt durch die bevorzugte Ausführungsform des erfindungsgemäßen Füllaggregates 1 zum Befüllen von Behältnissen B mit Füllgütern, insbesondere zum Befüllen von sack- oder schlauchförmigen Hüllen schematisch dargestellt. In einer Umhausung 2 ist ein Schneckenförderer F angeordnet, der drei achsparallele gleichläufige Schnecken 3, 4, 11 aufweist. Die Schraubenelemente der Schnecken 3, 4, 11 greifen radial ineinander, und die peripheren Kanten 7, 8, 12 der Schraubenelemente weisen zu den Innenflächen der Umhausung 2, mit Ausnahme zu einem Kanal 9, der an der Oberseite der Umhausung 2 ausgebildet ist, nur ein minimales Spiel S auf. Durch das radiale Ineinandergreifen der Schraubenelemente der Schnecken 3, 4, 11 werden Grobbestandteile, die zwischen benachbarte Windungen der Schraubenelemente gelangt sind und bei Schneckenförderern des Standes der Technik zu Blockierungen geführt haben, aus den Räumen zwischen den benachbarten Schraubenwindungen der beiden oberen Schraubenelemente wieder herausbefördert und gelangen in den oberhalb des Schneckenförderers F ausgebildeten Kanal 9 und werden in diesem an den peripheren Kanten der Schraubenelemente problemlos zur Ausgangsöffnung A des Füllaggregates 1 mitgeführt. Damit außerdem keine Grobbestandteile zwischen die peripheren Kanten 7, 8, 12 der Schraubenelemente und die Innenflächen der Umhausung 2 gelangen können, ist die Umhausung 2 so ausgebildet, dass zwischen den peripheren Kanten 7, 8, 12 der Schraubenelemente und den Innenflächen der Umhausung 2 nur ein minimales Spiel S besteht. Wenn das Füllgut, z.B. von einer Baggerschaufel oder einem Bandförderer kommend, in die Einfüllöffnung E eingegeben wird, können größere Grobbestandteile auf Grund des minimalen Spieles S nicht zwischen die peripheren Kanten 7, 8, 12 der Schraubenelemente und die Innenflächen der Umhausung 2 gelangen. Sie verbleiben in dem Kanal 9 oberhalb der peripheren Kanten 7, 8 der Schnecken 3, 4 und werden an den peripheren Kanten 7, 8 der Schraubenelemente im Kanal 9 in Richtung zur Ausgangsöffnung A mitgeführt. Wenn kleinere Grobbestandteile, die zwischen zwei benachbarte Schraubenwindungen jeweils eines der oberen Schraubenelemente passen, dorthinein geraten, werden Sie von der peripheren Kante des jeweils anderen radial eingreifenden oberen Schraubenelementes aus dem Zwischenraum herausgehalten oder herausbefördert und ebenfalls an den peripheren Kanten der Schraubenelemente im Kanal 9 bis zur Ausgangsöffnung A mitgeführt. Weiterhin sorgt ein minimales Spiel zwischen den peripheren Kanten 7, 8, 12 der Schraubenelemente zu den Umfängen der Wellen 5, 6, 10 dafür, dass auch an dieser Stelle keine kleineren Grobbestandteile zwischen die peripheren Kanten der Schraubenelemente und die Umfänge der Wellen 5, 6, 10 gelangen können, so dass auch hier ein Verklemmen der Bauteile infolge des Hineingeratens von kleineren Grobbestandteilen verhindert wird.

Während sich die mindestens zwei achsparallel und gleichläufig angeordneten Schnecken in der gleichen Drehrichtung drehen, führen die radial ineinander greifenden Schraubenelemente an ihren peripheren Kanten eine gegenläufige Bewegung aus, so dass eingedrungene Grobbestandteile mit Sicherheit aus dem Raum zwischen jeweils zwei benachbarten Schraubenwindungen wieder herausbewegt werden.

Sofern Schraubenelemente verschiedener Gängigkeit, d.h. rechts- und linksgängige Schraubenelemente verwendet werden, können auch gegenläufig bewegte Schnecken ineinander greifen.

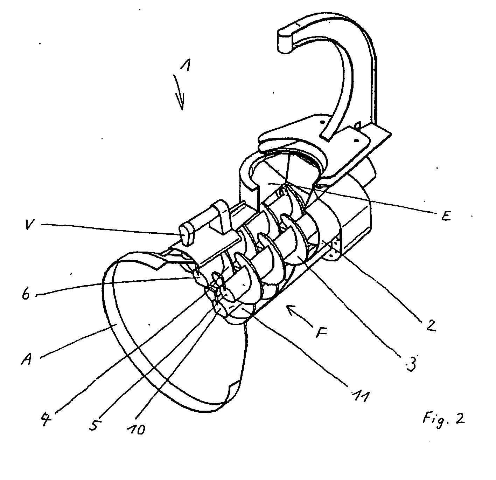

Die in den Figuren 1 bis 3 dargestellte erste bevorzugte Ausführungsform des Füllaggregates 1, dessen Schneckenförderer F drei Schnecken 3, 4, 11 umfasst, ist sowohl für die Verhinderung von Blockierungen durch Grobbestandteile als auch für die sichere und schnelle Förderung des Füllgutes besonders effektiv. Das in die Einfüllöffnung E z. B. mittels einer Baggerschaufel und unter Zuhilfenahme eines Einfülltrichters eingefüllte Füllgut rutscht zwischen die Schraubenwindungen der Schnecken 3, 4, 11 und wird durch die Bewegung der Schnecken in Richtung der Ausgangsöffnung A gefördert. Diese Förderung ist eine Zwangsförderung, d. h. das vom Schneckenförderer F in Richtung der Ausgangsöffnung A geförderte Füllgut drückt, solange das Füllaggregat 1 in Bewegung ist, ständig gegen das an der Ausgangsöffnung A bereits vorhandene Füllgut.

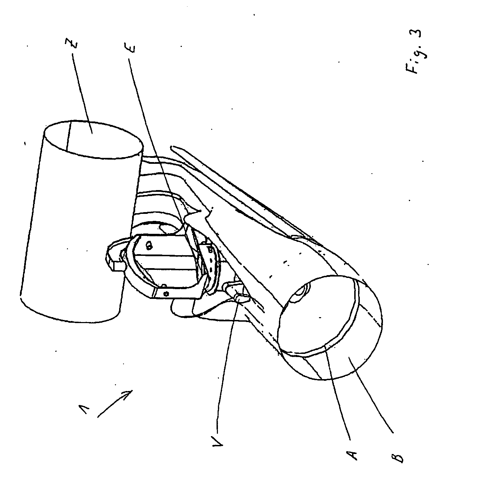

In Figur 3 ist das erfindungsgemäße Füllaggregat 1 beim Befüllen einer schlauchförmigen Hülle, d. h. dem Behältnis B dargestellt. Die schlauchförmige Hülle wird, wie in Figur 3 erkennbar ist, erst unmittelbar vor dem Befüllen aus Bahnmaterial, welches von einer Zuführeinrichtung Z abgezogen wird, mittels einer Verbindungseinrichtung V hergestellt. Die in Figur 3 dargestellte Zuführeinrichtung Z ist eine Bandrollenabzugseinrichtung, auf deren Rolle das Bahnmaterial, welches durch Verbindung seiner Längskanten zu einer schlauchförmigen Hülle verarbeitet werden soll, aufgewickelt ist. In dem in Figur 3 dargestellten Ausführungsbeispiel befindet sich die Zuführeinrichtung Z, in Förderrichtung des Füllgutes gesehen, hinter der Einfüllöffnung E für das Füllgut. Die Bahn wird von der Zuführeinrichtung Z abgezogen und unterhalb des Füllaggregates 1 in Richtung zur Ausgangsöffnung A geführt, wobei die Längskanten des Bahnmaterials um die kreisförmige Ausgangsöffnung A herum nach oben geführt werden, so dass die Bahn einen Schlauch mit einer Längsnaht bildet, welche mittels der Verbindungseinrichtung V geschlossen wird. Die in Figur 3 dargestellte Verbindungseinrichtung ist eine Nähmaschine, welche die überlappten Längskanten des Bahnmaterials miteinander vernäht. Die in dieser Weise hergestellte schlauchförmige Hülle wird an ihrer Vorderseite z. B. ebenfalls durch Nähen verschlossen, und vom Füllaggregat 1 mit Füllgut gefüllt. Das durch die Zwangsförderung des Füllaggregates 1 ständig nachdrückende Füllgut schiebt die schlauchförmige Hülle vom Füllaggregat 1 weg, wodurch ständig Bahnmaterial von der Zuführeinrichtung Z abgezogen und von der Verbindungseinrichtung V durch Verbindung der Längskanten des Bahnmaterials zu einer immer länger werdenden schlauchförmigen Hülle verbunden wird. Nach Füllung einer für einen bestimmten Verwendungszweck benötigten Länge wird die Funktion des Füllaggregates vorübergehend angehalten, um den gefüllten Teil der schlauchförmigen Hülle abzutrennen und am Ende zu verschließen. Die Funktion des Füllaggregates 1 kann nach dem Schließen des vorderen Endes zur Befüllung einer weiteren schlauchförmigen Hülle fortgesetzt werden. Wenn das Ende der von der Zuführeinrichtung Z zugeführten Schlauchbahn erreicht ist, kann dieses mit einer neuen Schlauchbahn verbunden werden und in dieser Weise der Füllvorgang praktisch in einem Endlosschlauch fortgesetzt werden.

Der Vorschub des von der Zuführeinrichtung Z abgezogenen Bahnmaterials erfolgt im dargestellten Ausführungsbeispiel durch den Schub, welcher vom durch das Füllaggregat 1 eingedrückten Füllgut auf den Anfang der schlauchförmigen Hülle ausgeübt wird. Die Verbindungseinrichtung V besitzt eine (nicht dargestellte) Steuereinrichtung, welche die Geschwindigkeit der Verbindung der Längskanten des Bahnmaterials an die Vorschubgeschwindigkeit durch den Schneckenförderer F anpasst.

Auch der Vorschub des Bahnmaterials kann durch eine Steuereinrichtung gesteuert werden. Die Verbindung der Längskanten des Bahnmaterials kann sowohl auf Stoß als auch überlappend erfolgen.

Zur Bildung der schlauchförmigen Hüllen können verschiedene Bahnmaterialien, z. B. Gewebe aus Natur- oder Kunststoffen, Kunststofffolien, Vliesmaterial usw. verwendet werden. Je nach dem verwendeten Material ist die Verbindungseinrichtung V eine Näh-, Schweiß-, Klebe- oder Falzverbindungseinrichtung. Die beiden Längskanten des Bahnmaterials können auch mit Klettelementen versehen werden, und die Verbindungseinrichtung V ist in diesem Falle eine Führungseinrichtung zum Zusammenführen der beiden mit Klettelementen vorgesehenen Längskanten. Schließlich kann die Verbindung der Längskanten des Bahnmaterials auch durch Knöpfe, Druckknöpfe, Nieten, Magnete, Schnüre, Reißverschlusselemente oder Hakengummibänder oder sonstige Verbindungselemente erfolgen.

Es ist auch möglich, schlauchförmiges Material zuzuführen, den Schlauch vor der Einfüllöffnung längsseitig zu trennen und vor der Ausgangsöffnung in der vorstehend beschriebenen Weise wieder zusammenzufügen.

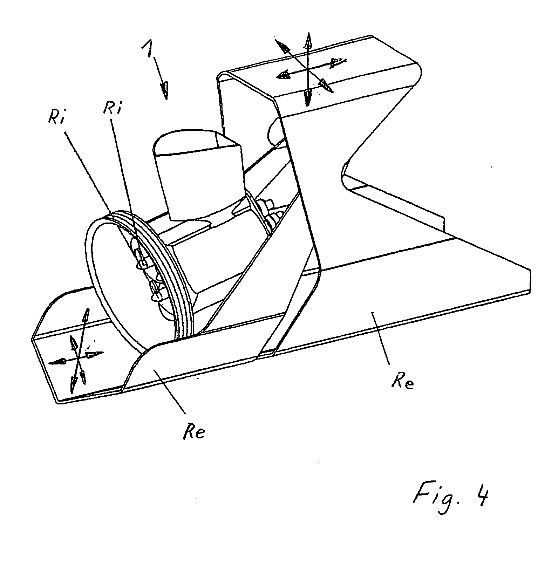

Figur 4 zeigt ein Füllaggregat 1, bei welchem zusätzlich interne und externe Rüttel- und Vibrationseinrichtungen Ri, Re vorgesehen sind. Die externen Rüttel- und Vibrationseinreichtunen Re umfassen ein oder mehrere am Behältnis B anliegende Rüttel- und Vibrationselemente, die elektromechanisch, pneumatisch, hydraulisch, elektromagnetisch u.s.w. angetrieben werden. Die externe Rüttel- und Vibrationseinrichtungen Re können als Punkt- oder Welle-Nabeverbindung ausgestaltet sein. Durch die auf das Behältnis ausgeübte Vibration werden die Füllgüter zusätzlich verdichtet.

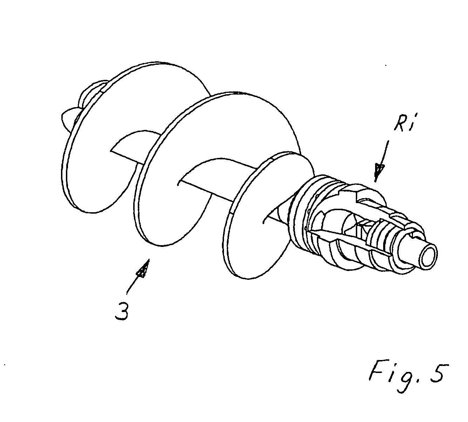

Figur 5 zeigt eine einzelne Schnecke 3, welche mit einer internen Rüttel- und Vibrationseinrichtung Ri verbunden ist, die als drehsteife, axialverschiebbare Punkt- oder Welle-Nabeverbindung ausgestaltet sein kann. Die interne Rüttel- und Vibrationseinrichtung Ri übt eine axial hin- und hergehenden Bewegung auf die Schnecke 3 aus. Die axial hin- und hergehende Bewegung kann z. B. auch durch ein Nockengetriebe, durch einen Pneumatikkolben usw. (ähnlich wie bei Bohrhämmern) angetrieben werden.

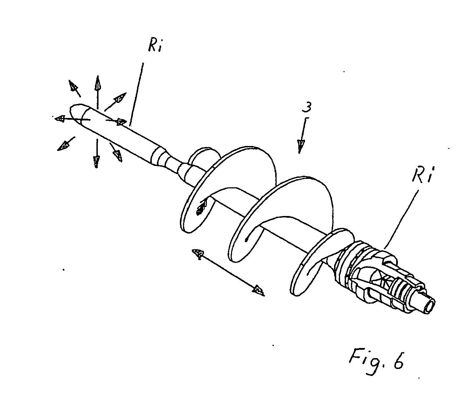

Figur 6 zeigt schließlich eine Schnecke 3, welche im hinteren Bereich mit einer vorstehend beschriebenen internen Rüttel- und Vibrationseinrichtung Ri verbunden ist, die eine axiale hin- und hergehende Bewegung ausübt, und die im vorderen Teil eine interne Rüttel- und Vibrationseinrichtung Ri aufweist, die durch Exzentrizität oder z.B. elektromagnetische Betätigung Vibrationen erzeugt, welche in beliebige Richtungen gerichtet sind. Selbstverständlich kann die im vorderen Teil der Schnecke angeordnete interne Rüttel- und Vibrationseinrichtung Ri auch allein verwendet werden.

Zweckmäßig werden, wie in Figur 4 dargestellt, verschiedene interne und externe Rüttel- und Vibrationseinrichtungen Ri, Re kombiniert eingesetzt, um eine möglichst hohe zusätzliche Verdichtung des in das Behältnis B eingefüllten Füllgutes zu erreichen.

Der Antrieb des Schneckenförderers F des Füllaggregates 1 erfolgt über bekannte Motoren, z. B. Elektro-, Verbrennungs-, Hydraulik- oder Pneumatikmotoren bzw. alternative Antriebe wie Brennstoffzellen usw.

## Patentansprüche

1. Füllaggregat (1) zum Befüllen von Behältnissen (B) mit Füllgütern, insbesondere zum Befüllen von sack- oder schlauchförmigen Hüllen, welches einen sich in einer Umhausung (2) bewegenden Schneckenförderer (F) mit mindestens zwei achsparallelen, gleich- oder gegenläufigen, mit Schraubenelementen versehenen Schnecken (3, 4, 11) umfasst, wobei die um je eine Welle (5, 6, 10) angeordneten Schraubenelemente der Schnecken (3, 4, 11) radial ineinander greifen und das Füllgut von einer Einfüllöffnung (E) in die an einer Ausgangsöffnung (A) lösbar befestigten Behältnisse (B) drücken, und die peripheren Kanten (7, 8, 12) der Schraubenelemente zu den Innenflächen der Umhausung (2) und zu den Umfängen der Wellen (5, 6, 10) nur ein minimales Spiel (S) aufweisen,
**dadurch gekennzeichnet,**
**dass** an der Oberseite der Umhausung (2) ein Grobbestandteile des Füllgutes aufnehmender und transportierender Kanal (9) ausgebildet ist,

2. Füllaggregat (1) nach Anspruch 1,
**dadurch gekennzeichnet,**
**dass** der Schneckenförderer (F) zwei Schnecken (3, 4) aufweist, die in einer Ebene nebeneinander angeordnet sind.

3. Füllaggregat (1) nach Anspruch 1 und/oder 2,
**dadurch gekennzeichnet,**
**dass** der Schneckenförderer (F) drei Schnecken (3, 4, 11) aufweist, wobei zwei obere Schnecken (3, 4) in einer Ebene nebeneinander angeordnet sind und die dritte Schnecke (11) mittig unterhalb der beiden oberen Schnecken (3, 4) angeordnet ist.

4. Füllaggregat (1) nach mindestens einem der vorhergehenden Ansprüche,
**gekennzeichnet durch**,
eine Zuführeinrichtung (Z) für Bahnmaterial und eine Verbindungseinrichtung (V) zur Verbindung beider Längskanten des Bahnmaterials auf Stoß oder überlappend zu einem schlauchförmigen Behältnis (B).

5. Füllaggregat (1) nach mindestens einem der vorhergehenden Ansprüche,
**dadurch gekennzeichnet,**
**dass** die Verbindungseinrichtung (V), in Förderrichtung gesehen, zwischen der Einfüllöffnung (E) und der Ausgangsöffnung (A) und die Zuführeinrichtung (Z) vor der Verbindungseinrichtung (V) angeordnet ist.

6. Füllaggregat (1) nach Anspruch 4 und/oder 5,
**dadurch gekennzeichnet,**
**dass** die Zuführeinrichtung (Z) eine vom Vorschub des Förderers (F) getriebene oder gesteuerte Bandrollenabzugseinrichtung ist.

7. Füllaggregat (1) nach mindestens einem der Ansprüche 4 bis 6,
**dadurch gekennzeichnet,**
**dass** die Verbindungseinrichtung (V) eine in Abhängigkeit vom Vorschub des Förderers (F) gesteuerte Verbindungseinrichtung ist.

8. Füllaggregat (1) nach mindestens einem der Ansprüche 4 bis 7,
**dadurch gekennzeichnet,**
**dass** die Verbindungseinrichtung (V) eine Näh-, Schweiß-, Klebe- oder Falzverbindungseinrichtung ist.

9. Füllaggregat (1) nach mindestens einem der Ansprüche 4 bis 7,
**dadurch gekennzeichnet,**
**dass** die beiden Längskanten des Bahnmaterials mit Klettelementen versehen sind und die Verbindungseinrichtung (V) eine Führungseinrichtung zum Zusammenführen beider Klettelemente ist.

10. Füllaggregat (1) nach mindestens einem der Ansprüche 4 bis 7,
**dadurch gekennzeichnet,**
**dass** die Verbindungseinrichtung (V) eine die Längskanten des Bahnmaterials durch Knöpfe und Knopflöcher, Druckknöpfe, Nieten, Magnete, Schnüre, Reißverschlusselemente oder Hakengummibänder verbindende Einrichtung ist.

11. Füllaggregat (1) nach mindestens einem der vorhergehenden Ansprüche,
**dadurch gekennzeichnet,**
**dass** es mindestens eine interne und/oder externe Rüttel- und/oder Vibrationseinrichtung (Ri, Re) aufweist.

12. Füllaggregat (1) nach Anspruch 11,
**dadurch gekennzeichnet,**
**dass** die mindestens eine interne Rüttel- und/oder Vibrationseinrichtung (Ri) eine sich axial bewegende, mit der (den) Schnecke(n) (3, 4, 11) verbundene Rüttel- und/oder Vibrationseinrichtung ist.

13. Füllaggregat (1) nach Anspruch 11,
**dadurch gekennzeichnet,**
**dass** die mindestens eine interne Rüttel- und/oder Vibrationseinrichtung (Ri) eine sich in beliebiger Richtung bewegende, mit der (den) Schnecke(n) (3, 4, 11) verbundene Rüttel- und/oder Vibrationseinrichtung ist.

14. Füllaggregat (1) nach Anspruch 11,
**dadurch gekennzeichnet,**
**dass** die externe Rüttel- und/oder Vibrationseinrichtung (Re) einen oder mehrere am Behältnis (B) anliegende Rüttel- und/oder Vibrationselemente umfasst.

## Claims

1. Filling unit (1) for filling containers (B) with filling materials, in particular for filling bag- or hose-shaped shells, wherein said filling unit comprises a worm conveyor (F) moving in a housing (2), comprising at least two axially parallel worms (3, 4, 11), running in the same or in opposite directions, provided with screw elements, wherein the screw elements of the worms (3, 4, 11), each disposed about one respective shaft (5, 6, 10), radially engage one another, pressing the filling material from a filling opening (E) into the containers (B), removably mounted at an output opening (A), and wherein the peripheral edges (7, 8, 12) of the screw elements only have minimum clearance (S) with respect to the inner surfaces of the housing (2) and with respect to the circumferences of the shafts (5, 6, 10), **characterized by** a channel (9) for receiving and transporting the coarse components of the filling material which is configured at the upper side of the housing (2).

2. Filling unit (1) according to claim 1, **characterized in that** the worm conveyor (F) comprises two worms (3, 4), which are disposed in a plane next to one another.

3. Filling unit (1) according to claim 1 and/or 2, **characterized in that** the worm conveyor (F) comprises three worms (3, 4, 11), wherein two upper worms (3, 4) are disposed in a plane next to one another and the third worm (11) is centrally located below the two upper worms (3, 4).

4. Filling unit (1) according to at least one of the preceding claims, **characterized by** a feeding device (Z) for web material and a connection device (V) for connecting the two longitudinal edges of the web material through a butt joint or through an overlapping joint to form a hose-shaped container (B).

5. Filling unit (1) according to at least one of the preceding claims, **characterized in that** the connection device (V) which is disposed between the filling opening (E) and the output opening (A), viewed in feeding direction, and the feeding device (Z) is disposed in front of the connection device (V), viewed in feeding direction.

6. Filling unit (1) according to claim 4 and/or 5, **characterized in that** the feeding device (Z) is a web roll pull off device, driven or controlled by the feed of the conveyor (F).

7. Filling unit (1) according to at least one of the claims 4 through 6, **characterized in that** the connection device (V) is controlled as a function of the feed of the conveyor (F).

8. Filling unit (1) according to at least one of the claims 4 through 7, **characterized in that** the connection device (V) is a sewing-, welding-, gluing- or fold connection device.

9. Filling unit (1) according to at least one of the claims 4 through 7, **characterized in that** the two longitudinal edges of the web material are provided with hook-and-loop elements and the connection device (V) is a guide device for joining both hook-and-loop elements.

10. Filling unit (1) according to at least one of the claims 4 through 7, **characterized in that** the connection device (V) is a device, which connects the longitudinal edges of the web material, by buttons and button holes, snap connectors, rivets, magnets, threads, zipper elements or engaging rubber bands with hooks.

11. Filling unit (1) according to at least one of the preceding claims, **characterized in that** it comprises at least one internal and/or external rattling- and/or vibration device (Ri, Re).

12. Filling unit (1) according to claim 11, **characterized in that** the at least one internal rattling- and/or vibration device (Ri) is an axially moving rattling- and/or vibration device, which is connected to the worm(s) (3, 4, 11).

13. Filling unit (1) according to claim 11, **characterized in that** the at least one internal rattling- and/or vibration device (Ri) is a rattling- and/or vibration device, which moves in any direction and which is connected to the worm(s) (3, 4, 11).

14. Filling unit (1) according to claim 11, **characterized in that** the external rattling-and/or vibration device (Re) comprises one or plural rattling- and/or vibration elements, which contact the container (B).

## Revendications

1. Organe de remplissage (1) pour le remplissage de récipients (B) avec des produits de remplissage, en particulier pour le remplissage d'enveloppes en forme de sacs ou de tuyaux, qui comprend un convoyeur à vis (F) se déplaçant dans une enceinte (2), avec au moins deux vis (3, 4, 11) à axes parallèles, à marche synchrone ou opposée, munies d'éléments à vis, les éléments à vis, disposés respectivement autour d'un arbre (5, 6, 10), des vis (3, 4, 11), s'engrenant radialement l'un dans l'autre et pressant le produit de remplissage depuis une ouverture de remplissage (E) dans les récipients (B) fixés de façon détachable sur une ouverture de sortie (A), et les arêtes périphériques (7, 8, 12) des éléments à vis ne présentant qu'un jeu (S) minimal par rapport aux surfaces intérieures de l'enceinte (2) et aux circonférences des arbres (5, 6, 10),
**caractérisé en ce que**,
sur le côté supérieur de l'enceinte (2), il est constitué une gaine (9) recevant et transportant des composants grossiers du produit de remplissage.

2. Organe de remplissage (1) selon la revendication 1,
**caractérisé en ce que**
le convoyeur à vis (F) présente deux vis (3, 4) qui sont juxtaposées dans un plan.

3. Organe de remplissage (1) selon la revendication 1 et/ou 2,
**caractérisé en ce que**
le convoyeur à vis (F) présente trois vis (3, 4, 11), deux vis supérieures (3, 4) étant juxtaposées dans un plan, et la troisième vis (11) étant disposée de façon centrée sous les deux vis supérieures (3, 4).

4. Organe de remplissage (1) selon au moins une des revendications précédentes,
**caractérisé par**
un équipement d'amenée (Z) pour le matériau de glissière et un équipement de raccordement (V) pour le raccordement des deux arêtes longitudinales du matériau de glissière en butée ou en chevauchement par rapport à un récipient (B) en forme de tuyau.

5. Organe de remplissage (1) selon au moins une des revendications précédentes,
**caractérisé en ce que**
l'équipement de raccordement (V), vu dans le sens de transport, est disposé entre l'ouverture de remplissage (E) et l'ouverture de sortie (A), et **en ce que** l'équipement d'amenée (Z) est disposé devant l'équipement de raccordement (V).

6. Organe de remplissage (1) selon la revendication 4 et/ou 5,
**caractérisé en ce que**
l'équipement d'amenée (Z) est un équipement de prélèvement à rouleaux de bande entraîné ou commandé par l'avance du convoyeur (F).

7. Organe de remplissage (1) selon au moins une des revendications 4 à 6,
**caractérisé en ce que**
l'équipement de raccordement (V) est un équipement de raccordement commandé en fonction de l'avance du convoyeur (F).

8. Organe de remplissage (1) selon au moins une des revendications 4 à 7,
**caractérisé en ce que**
l'équipement de raccordement (V) est un équipement de raccordement par couture, soudage, collage ou pliage.

9. Organe de remplissage (1) selon au moins une des revendications 4 à 7,
**caractérisé en ce que**
les deux arêtes longitudinales du matériau de glissière sont munies d'éléments autoagrippants, et **en ce que** l'équipement de raccordement (V) est un équipement de guidage pour la réunion des deux éléments autoagrippants.

10. Organe de remplissage (1) selon au moins une des revendications 4 à 7,
**caractérisé en ce que**
l'équipement de raccordement (V) est un équipement raccordant les arêtes longitudinales du matériau de glissière par des boutons et des boutonnières, des boutons-pressions, des rivets, des aimants, des ficelles, des éléments de fermeture à glissière ou des bandes en caoutchouc à crochet.

11. Organe de remplissage (1) selon au moins une des revendications précédentes,
**caractérisé en ce**
**qu'**il présente au moins un équipement de secouage et/ou vibrant interne et/ou externe (Ri, Re).

12. Organe de remplissage (1) selon la revendication 11,
**caractérisé en ce que**
l'équipement de secouage et/ou vibrant interne (Ri), au moins au nombre de un, est un équipement de secouage et/ou vibrant se déplaçant dans la direction axiale, raccordé à la/aux vis (3, 4, 11).

13. Organe de remplissage (1) selon la revendication 11,
**caractérisé en ce que**
l'équipement de secouage et/ou vibrant interne (Ri), au moins au nombre de un, est un équipement de secouage et/ou vibrant se déplaçant dans n'importe quelle direction, raccordé à la/aux vis (3, 4, 11).

14. Organe de remplissage (1) selon la revendication 11,
**caractérisé en ce que**
l'équipement de secouage et/ou vibrant externe (Re) comprend un ou plusieurs éléments de secouage et/ou vibrant appuyés contre le récipient (B).
